# NEUE EUROPÄISCHE PATENTSCHRIFT

(11) **EP 0 447 511 B2**
(45) Veröffentlichungstag und Bekanntmachung des Hinweises auf die Entscheidung über den Einspruch: **05.08.1998**
(45) Hinweis auf die Patenterteilung: 26.04.1995
(21) Anmeldenummer: 90914172.3
(22) Anmeldetag: 02.10.1990
(51) Int. Cl.: B66C 23/90, E02F 9/24

(54) **VERFAHREN ZUM ÜBERWACHEN VON ANLAGEN, WIE AUTOKRANE, GROSSBAGGER ODER DERGLEICHEN, UND SYSTEM ZUR VERWIRKLICHUNG DIESES VERFAHRENS**
PROCESS AND SYSTEM FOR MONITORING AN INSTALLATION, SUCH AS AN AUTOMOBILE CRANE, LARGE EXCAVATOR OR THE LIKE
PROCEDE ET SYSTEME POUR SURVEILLER UNE INSTALLATION, TELLE QU'UNE GRUE AUTOMOBILE, UN GROS EXCAVATEUR OU SIMILAIRE

(30) Priorität: 04.10.1989 DE 3933060
(43) Veröffentlichungstag der Anmeldung: 25.09.1991
(73) Patentinhaber: PIETZSCH AUTOMATISIERUNGSTECHNIK GMBH, 76275 Ettlingen (DE)
(72) Erfinder: PIETZSCH, Heinz, Werner, D-7500 Karlsruhe 41 (DE); BRONK, Hans, D-7505 Ettlingen (DE)
(74) Vertreter: Geitz, Heinrich, Dr.-Ing.
(86) Internationale Anmeldenummer: EP9001653
(87) Internationale Veröffentlichungsnummer: WO9104938

(56) Entgegenhaltungen:
- DE-A- 3 628 738
- DE-C- 3 612 767
- FR-A- 2 501 660
- GB-A- 2 050 294
- US-A- 4 677 555
- BMT, Januar 1987, Seiten 18-21, Verfügbarkeit und Service von grossen Hydraulikbaggern-ein Plädoyer für vorbengende Instandhaltung von Jörg Lorenz.
- Prospekt der Firma O&K, Bord Control System, B1320/3-587;
- Prospekt der Firma O&K, Bord Control System, B207.0c4, 3.89.

## Beschreibung

Die Erfindung bezieht sich auf ein Verfahren zum Überwachen von Anlagen, wie Autokrane, Großbagger, Baumaschinen oder dergleichen mit mehreren unabhängig voneinander betätigbaren Komponenten (Funktionssystemen) und mit einem Überwachungs- und Steuerungssystem, desgleichen auf ein für die Durchführung dieses Verfahrens geeignetes System.

Aus der EP-A-0 187 772 ist bereits ein Überwachungs- und Steuerungssystem für Auslegerkrane mit einem Lastmomentbegrenzer und einer mit diesem verknüpften und von einem Kranführer beeinflußbaren Steuereinrichtung für die Kranantriebe bekannt. Der Lastmomentbegrenzer ist mit einem Rechner ausgerüstet, dem Daten über die jeweilige Auslastung, die Auslegerlänge, den Auslegerwinkel und dergleichen mehr als Parameter zugeführt werden und dessen Aufgabe darin besteht, den jeweiligen Istwert des Lastmomentes mit einem Sollwert zu vergleichen. Dadurch gelingt es, beim Erreichen des Lastmoment-Sollwertes diesen mittels eines Verknüpfungsgerätes zu erfassen und ein geeignetes Überwachungssignal auszulösen. Auch kann ein weiterer Rechner vorgesehen sein, dem über geeignete Verknüpfungsglieder und Mittel zur Datenübertragung die relevanten Parameter und Daten zugeführt werden und der diese Parameter und Daten in Führungsgrößen für die Steuerung umsetzt.

Das vorbekannte Überwachungs- und Steuerungssystem, bei dem der Lastmomentbegrenzer und die Steuereinrichtung über eine digitale Schnittstelle miteinander verknüpft sind, hat sich insofern bewährt, als beim Auftreten eines kritischen Belastungszustandes die Kransicherheit nicht mehr allein durch das Eingreifen des Kranführers bestimmt wird, sondern dadurch, daß die bei der Lastmomentbegrenzung erfaßten und verarbeiteten Daten die Steuereinrichtung unmittelbar so beeinflussen, daß an die Kranantriebe gegebene Steuerbefehle in Abhängigkeit vom jeweiligen Istzustand begrenzt werden. Bei diesen Daten kann es sich um Größen wie Radius, Last, Auslastung, Rüstzustand und dergleichen handeln.

Als unzulänglich hat sich das vorbekannte Überwachungsund Steuerungssystem jedoch erwiesen, wenn die ermittelten Zustandsdaten das Eingreifen des Anlagenführers erfordern, dieser jedoch beispielsweise eine Störungsanzeige nicht oder nicht zutreffend zu interpretieren vermag.

Die der Erfindung zugrundeliegende Aufgabe besteht daher in der Schaffung eines vom jeweiligen Anlagenführer unabhängigen Verfahrens zum Überwachen und/oder Steuern von Anlagen der vorgenannten Art. Ferner soll ein für die Verfahrensdurchführung geeignetes System angegeben werden.

In verfahrenstechnischer Hinsicht ist die vorstehende Aufgabe durch Schaffung eines Verfahrens zum Überwachen einer Anlage mit mehreren zusammenwirkenden Komponenten, die voneinander verschieden oder auch gleich sein können, und einem Überwachungs- und Steuerungssystem gelöst, bei dem durch die Überwachung zumindest ausgewählter Anlagenkomponenten (Funktionssysteme) gewonnene Zustandsdaten - gegebenenfalls auf Abruf - mit Hilfe einer geeigneten seriellen Datenfernübertragung an einen gegebenenfalls weit von der Anlage entfernten Leit- oder Kontrollstand zur Überwachung übermittelt und zum Verändern der Parameter des Überwachungs- und Steuerungssystems und/oder der Funktionssysteme und zur Fernsteuerung mittels der erwähnten Datenfernübertragung von dem abgesetzten Leit- oder Kontrollstand Daten und/oder Steuerbefehle an das Überwachungs- und Steuerungssystem übertragen werden.

Das erfindungsgemäße Verfahren schafft die Möglichkeit, einerseits mit anlageninternen Überwachungsmitteln gewonnene Systemdaten automatisch oder auf Abruf an gegebenenfalls weit entfernte zentrale Leit- oder Kontrollstände zu übermitteln und andererseits von diesen Leit- oder Kontrollständen durch geeignete Steuerbefehle auf Überwachungs- und Steuerungssysteme von Anlagen einzuwirken, um deren Parameter zu verändern oder um eine Fernsteuerung durchzuführen.

Dem Verfahren nach der Erfindung kommt wesentliche Bedeutung insofern zu, als angesichts der steigenden Komplexität der in Rede stehenden Anlagen es schlechterdings unmöglich ist, an oft weit entfernten und häufig wechselnden Einsatzorten hinreichend sachkundiges Personal für Wartungs-, Diagnose- und/oder Reparaturarbeiten vorzuhalten oder in angemessener Zeit zu den jeweiligen Einsatzorten zu bringen.

Hier schafft die Erfindung Abhilfe insofern, als mit sachkundigem Personal besetzte Leit- oder Kontrollstände mit den jeweiligen Anlagen in Verbindung treten und von zentraler Stelle aus in den Anlagenbetrieb eingreifen oder etwa bei Reparaturfällen Diagnosen durchführen können, um nach einer derartigen Vorklärung aufgetretene Problemfälle durch Expertenberatung vom Leit- oder Kontrollstand aus zum Lösen oder gezielt Personal und Material an den jeweiligen Einsatzort zu entsenden. Weiterhin ist es möglich, vom Leit- oder Kontrollstand aus Änderungen in der Systemkonfiguration, d.h. in der Verwertung der einzelnen Systemkomponenten und Subsysteme durchzuführen, um so unter Aufgabe nebensächlicher Funktionen die Haupttunktion ganz ohne Bauteilreparatur aufrechtzuerhalten. Die dadurch erzielbaren Einsparungen an Kosten und Zeit bedürfen keiner Erörterung.

Eine sinnvolle Weiterentwicklung des erfindungsgemäßen Verfahrens sieht vor, daß bei ringförmig strukturiertem Anschluß von Bus-Systemen durch Verändern der Datenflußstruktur des Überwachungs- und Steuerungssystems und/oder der Funktionssysteme bei nicht betriebsfähigen Anlagenkomponenten der Ausfall des Systems auf die nicht betriebsfähigen Anlagenkomponenten beschränkt wird.

Mangelnde Betriebsfähigkeit einzelner Anlagenkomponenten oder Störungen im Übertragungssystem können mithin nicht mehr zum Ausfall des Gesamtsystems führen. Bei Störungen im Übertragungssystem sind vielmehr jenseits einer Störungsstelle liegende Anlagenkomponenten durch Ändern der Datenflußrichtung weiter ansteuerbar.

Das der Verfahrensdurchführung dienende System ist erfindungsgemäß dadurch gekennzeichnet, daß das Überwachungs- und Steuersystem der jeweiligen Anlage zum Online-Datenaustausch mit dem abgesetzten Leit- oder Kontrollstand eine bidirektionale, serielle Datenfernübertragungschnittstelle aufweist und daß der Leit- oder Kontrollstand mit entsprechenden Datenfernübertragungsmitteln ausgerüstet ist.

Charakteristisch für dieses System ist mithin eine Online-Verbindung des anlageninternen Überwachungs- und Steuerungssystems mit dem - gegebenenfalls weit entfernten - Leit- oder Kontrollstand mit der Möglichkeit, über eine bidirektionale Verbindung mit Hilfe einer geeigneten drahtgebundenen oder drahtlosen Datenfernübertragung einerseits interessierende Zustandsdaten, wie Geometrie, Belastung, Motordaten und dergleichen, darzustellen und andererseits von dem Leit- oder Kontrollstand aus durch geeignete Steuerbefehle auf das Überwachungs- und Steuerungssystem der Anlage einzuwirken.

Eine sinnvolle Ausgestaltung des erfindungsgemäßen Systems sieht vor, daß die serielle, bidirektionale Datenfernübertragungschnittstelle als Modul eines Managementrechners ausgebildet ist.

Alternativ dazu kann - gemäß einer anderen Ausgestaltung - die serielle, bidirektionale Datenfernübertragungsschnittstelle als Bus-System des Überwachungs- und Steuerungssystems mit seriellen bidirektionalen Feld-Bus mit Parallelanschluß der einzelnen Bus-Systeme ausgebildet sein.

Eine andere wichtige Ausgestaltung sieht vor, daß die serielle, bidirektionale Datenfernübertragungsschnittstelle als Bus-System des Überwachungs- und Steuerungssystems mit seriellem, bidirektionalen Feld-Bus mit ringförmig strukturiertem Anschluß der Bus-Systeme ausgebildet und die Datenflußrichtung im Ring-Bus-System umkehrbar ist. Diese Umkehrbarkeit der Datenflußrichtung ermöglicht die Durchführung des Verfahrens gemäß Patentanspruch 2 und mithin die Ansteuerbarkeit funktionsfähiger Anlagenkomponenten jenseits einer im Übertragungssystem auftretenden Störstelle.

Auch kann - gemäß einer anderen wichtigen Weiterbildung der Erfindung - das System durch die Ankopplung intelligenter Bus-Subsysteme mit einer Struktur gekennzeichnet sein, die eine kurzzeitige oder dauernde Veränderung systemimmanenter Parameter durch an anderer Stelle mittels der Datenfernübertragung in das Überwachungsund Steuerungssystem eingebrachten Daten und/oder Steuerbefehle vom gegebenenfalls weit entfernten Leit- und Kontrollstand zuläßt.

Zwar hätte eine Überlastsicherung mit einem bekannten, internen Rechnerbus (Speicher bzw. E/A-Bus) versehen werden können, aber die Verwendung eines bidirektionalen, seriellen Feldbusses hat den Vorteil, daß man eine nahezu beliebige Anzahl von selbständigen Subsystemen bzw. Komponenten anschließen kann. Außerdem ist mit diesem Bus auch eine Datenübertragung über größere Entfernungen innerhalb der Anlage möglich. Dadurch wird erreicht, daß der direkte Zugriff von außen auf die einzelnen Komponenten oder Subsysteme möglich ist.

Zwei Ausführungsbeispiele des erfindungsgemäßen Systems zur Überwachung und/oder Steuerung von Anlagen soll nachstehend anhand der beigefügten Zeichnung erläutert werden. In schematischen Ansichten zeigen:
- Fig. 1: ein Überwachungs- und Steuerungssystem einer Krananlage,
- Fig. 2: einen von der Krananlage weit entfernten Leit- oder Kontrollstand,
- Fig. 3: ein Blockschaltbild einer ersten Ausführungsform des Überwachungs- und Steuerungssystems der Krananlage und
- Fig. 4: ein Blockschaltbild einer zweiten Ausführungsform des Überwachungs- und Steuerungssystems der Krananlage.

Das Überwachungs- und Steuerungssystem 10 der nicht weiter dargestellten Krananlage, bei der es sich um einen Auslegerkran handeln kann, und der davon entfernte Leit- und Kontrollstand 11 können mittels einer geeigneten Datenfernübertragung miteinander in Verbindung treten. Demgemäß sind sowohl das Überwachungs- und Steuerungssystem als auch der Leit- und Kontrollstand je mit einer Datenfernübertragungs-schnittstelle 12, 13 ausgerüstet und stehen mit geeigneten Datenfernübertragungsmitteln 14, 15, 16 bzw. 17, 18, 19 in Verbindung, die drahtgebunden oder drahtlos arbeiten können.

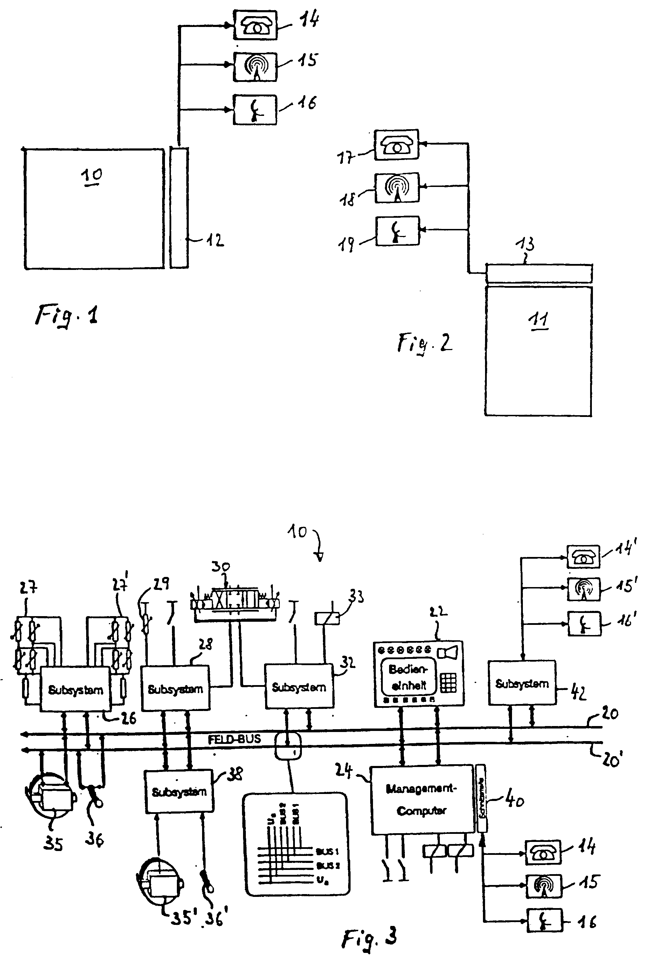

Wie das Blockschaltbild gemäß Fig. 3 zeigt, handelt es sich bei der ersten Ausführungsform des Überwachungs- und Steuerungssystems 10 der Anlage um ein Mikroprozessor-System mit doppeltem seriellen Bus 20, 20'. Das System umfaßt als Bedienungseinheit 22 eine Konsole mit Vollgraphik-Display und einen Managementrechner 24. Die Bedieneinheit und der Managementrechner sind direkt an den Feldbus angeschlossen.

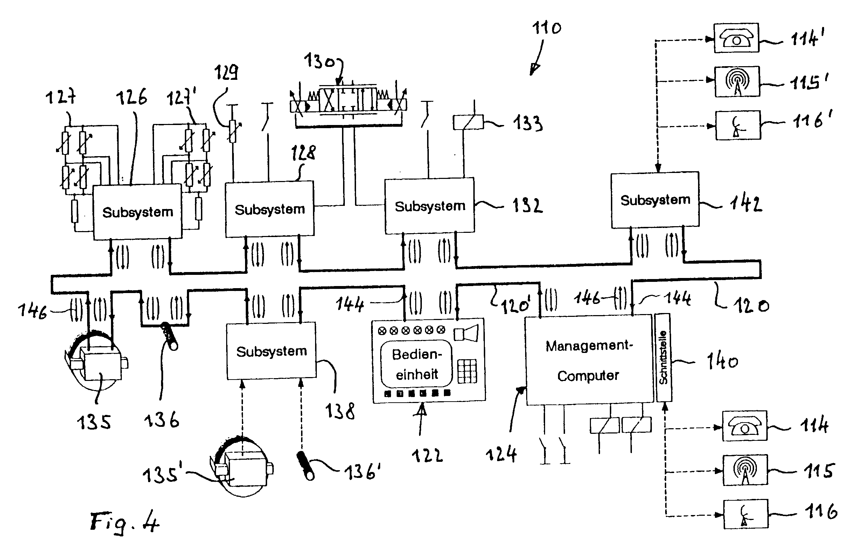

Bei der in Fig. 4 veranschaulichten Ausführungsform sind für gleiche Teile wie in Fig. 3 um jeweils 100 erhöhte Bezugszeichen eingeführt. Es handelt sich wiederum um ein als Mikroprozessor-System ausgebildetes Überwachungs- und Steuerungssystem 110, das jedoch nicht mit einem doppelten seriellen Bus ausgestattet ist, sondern mit einem ringförmig strukturierten Bus 120, 120', an den eine Konsole mit VollgraphikDisplay als Bedieneinheit 122 und ein Managementrechner 124 direkt angeschlossen sind.

Ferner umfassen die bei den Systemausführungen mehrere Subsysteme und Sensoren mit Direktanschluß an den Bus, die somit gleichermaßen mit der Bedieneinheit 22, 122 und dem Management-Computer 24, 124 und gegebenenfalls auch untereinander in Wirkverbindung stehen. Die Subsysteme dienen der Verarbeitung von Eingangssignalen und zur Ansteuerung von Stellgliedern oder sonstigen Funktionselementen.

Das Subsystem 26, 126 umfaßt an geeigneten Anlagenteilen angeordnete Meßwertaufnehmer 27, 127, 27', 127' bei denen es sich im vorliegenden Falle um Dehnmeßstreifen in Brückenschaltung handelt. Auf das Subsystem 28, 128 sind ein über dieses ansteuerbares Potentiometer 29, 129 und ein Magnetventil 30, 130 geschaltet, hingegen auf das Subsystem 32, 132 ein Relais 33, 133 und das bereits genannte Magnetventil 30, 130.

Desweiteren zeigen die Blockschaltbilder einen translatorischen bzw. rotatorischen Meßwertaufnehmer, z.B. mit potentiometrischem Abgriff 35, 135 und einem druckabhängigen Sensor 36, 136 die ebenfalls direkt an den Bus angeschlossen sind. Alternativ dazu können derartige potentiometrische Meßwertaufnehmer 35', 135' und druckabhängige Sensoren 36', 136' auch einem Subsystem 38, 138 mit Direktanschluß an den Bus zugeordnet sein.

Ferner sind die in den Blockschaltbildern gemäß Fig. 3 und 4 veranschaulichten Überwachungs- und Steuerungssystem 10, 110 der Anlage mit einer Datenfernübertragungsschnittstelle ausgerüstet, die entweder als Modul 40, 140 des Managementrechners 24, 124 oder als weiteres Subsystem 42, 142 mit Direktanschluß an den Bus ausgebildet sein kann. Bei der Datenfernübertragung kann es sich um ein drahtgebundenes System handeln, wie bei 14, 14'; 114, 114' und 17 angedeutet ist, oder um drahtlose Übertragungsmittel mit Sendern 15, 15'; 115, 115' und 18 sowie Empfangsantennen 16, 16'; 116, 116' und 19.

Bei dem anhand des Blockschaltbildes in Fig. 4 veranschaulichten Überwachungs- und Steuerungssystem 110 sind die einzelnen Anlagenkomponenten aufeinanderfolgend an den ringförmig strukturierten Bus 120, 120' angeschlossen und vermögen mit der Bedieneinheit 122 und dem Managementrechner 124, die ebenfalls direkt an den Bus angeschlossen sind, zu kommunizieren. Die durch die Pfeile 144 angegebene - normale - Datenflußrichtung ist wahlweise umkehrbar, wie die in Klammern stehenden Pfeile 146 andeuten.

Die Anordnung ist bei diesem System so getroffen, daß durch Verändern der Datenflußrichtung des Überwachungs- und Steuerungssystems und/oder der Funktionssysteme bei nicht betriebsfähigen Anlagenkomponenten der Ausfall des Systems auf die nicht betriebsfähigen Anlagenkomponenten beschränkt bleibt. Etwaig auftretenden Störungen im Übertragungssystem kann in einfacher Weise durch Umkehr der Datenflußrichtung begegnet werden. Wenn beispielsweise bei einer. Datenflußrichtung gemäß Pfeile 144 eine jenseits einer Störungsstelle liegende Anlagenkomponente von der Bedieneinheit 122 bzw. dem Management-Computer 124 nicht mehr ansteuerbar ist, können nach einer Umkehr des Datenflusses gemäß Pfeil 146 derartige Anlagenkomponenten mit der Bedieneinheit und dem ManagementComputer wieder kommunizieren.

## Patentansprüche

1. Verfahren zum Überwachen einer Anlage mit mehreren zusammenwirkenden Komponenten (Funktionssystemen) und einem Überwachungs- und Steuersystem zum Überwachen eines Autokranes, Großbaggers oder einer sonstigen Baumaschine, bei dem
- durch die Überwachung zumindest ausgewählter Anlagenkomponenten (Funktionssysteme) gewonnene Zustandsdaten - gegebenenfalls auf Abruf - mit Hilfe einer geeigneten seriellen Datenfernübertragung an einen gegebenenfalls weit von der Anlage entfernten Leitoder Kontrollstand übermittelt und
- zum Verändern der Parameter des Überwachungs- und Steuerungssystems und/oder der Funktionssysteme und zur Fernsteuerung mittels der erwähnten Datenfernübertragung von dem Leit- oder Kontrollstand Daten und/oder Steuerbefehle an das Überwachungs- und Steuerungssystem übertragen werden.

2. Verfahren nach Anspruch 1, dadurch gekennzeichnet, daß bei ringförmig struktuiertem Anschluß von Bus-Systemen durch Verändern der Datenflußstruktur des Überwachungs-und Steuerungssystems und/oder der Funktionssysteme bei nicht betriebsfähigen Anlagenkomponenten der Ausfall des Systems auf die nicht betriebsfähigen Anlagenkomponenten beschränkt wird.

3. System zum Durchführen des Verfahrens nach Patentanspruch 1, dadurch gekennzeichnet, daß das Überwachungs- und Steuerungssystem (10, 110) der Anlage zum OnlineDatenaustausch mit einem abgesetzten Leit- oder Kontrollstand (11) eine bidirektionale, serielle Datenfernübertragungsschnittstelle (12, 40, 42, 140, 142) aufweist und daß der Leit- oder Kontrollstand mit entsprechenden Datenfernübertragungsmitteln ausgerüstet ist.

4. System nach Anspruch 3, dadurch gekennzeichnet, daß die serielle, bidirektionale Datenfernübertragungsschnittstelle als Modul (40, 140) eines Managementrechners (24, 124) des Überwachungs- und Steuerungssystems (10, 110) ausgebildet ist.

5. System nach Anspruch 3, dadurch gekennzeichnet, daß die serielle, bidirektionale Datenfernübertragungsschnittstelle als Bus-Subsystem (42) des Überwachungs- und Steuerungssystems (10) mit seriellen bidirektionalen Feld-Bus mit Parallelanschluß der einzelnen Bus-Subsysteme ausgebildet ist.

6. System nach Anspruch 3, dadurch gekennzeichnet, daß die serielle bidirektionale Datenfernübertragungsschnittstelle als Bus-Subsystem (142) des Überwachungs- und Steuerungssystems (110) mit seriellem, bidirektionalem Feld-Bus mit ringförmig strukturiertem Anschluß der Bus-Systeme ausgebildet und die Datenflußrichtung im Ring-Bus-System umkehrbar ist.

7. System nach einem der Ansprüche 3 bis 6, gekennzeichnet durch die Ankopplung intelligenter Bus-Subsysteme (26, 28, 32, 38, 126, 128, 132, 138) mit einer Struktur, die eine kurzzeitige oder dauernde Veränderung subsystemimmanenter Parameter durch an anderer Stelle mittels der Datenfernübertragung in das Überwachungsund Steuerungssystem eingebrachter Daten und/oder Steuerbefehle zuläßt.

## Claims

1. Method for the monitoring of a plant with several co-operating components (functional systems) and a monitoring and control system for the monitoring of a mobile crane, heavy dredger or other construction machine, in which
- status data, which have been obtained through the monitoring of at least selected plant components (functional systems), can be communicated - in a given case on call - to a control post or check point, in a given case far away from the plant, with the aid of a suitable serial long-range data transmission, and
- data and/or control commands are transmitted to the monitoring and control system from the control post or check point by means of the mentioned long-range data transmission for variation of the parameters of the monitoring and control system and/or the functional systems and for remote control.

2. Method according to claim 1, characterised thereby, that in the case of the connection of bus systems structured in the form of a ring and in the case of inoperative plant components, the failure of the system is restricted to the inoperative plant components through variation of the data flow structure of the monitoring and control system and/or the functional systems.

3. System for the performance of the method according to patent claim 1, characterised thereby, that the monitoring and control system (10, 110) of the plant displays a bidirectional serial long-range data transmission interface (12, 40, 42, 140, 142) for the on-line data exchange with a remote control post or check point (11) and that the control post or check point is equipped with appropriate long-range data transmission means.

4. System according to claim 3, characterised thereby, that the bidirectional serial long-range data transmission interface is constructed as module (40, 140) of a management computer (24, 124) of the monitoring and control system (10, 110).

5. System according to claim 3, characterised thereby, that the bidirectional serial long-range data transmission interface is constructed as bus subsystem (42) of the monitoring and control system (10) with bidirectional serial field bus with parallel connection of the individual bus subsystems.

6. System according to claim 3, characterised thereby, that the bidirectional serial long-range data transmission interface is constructed as bus subsystem (142) of the monitoring and control system (110) with bidirectional serial field bus with connection of bus systems structured in the form of a ring and the direction of the data flow in the ring bus system is reversible.

7. System according to one of the claims 3 to 6, characterised by the coupling to intelligent bus subsystems (26, 28, 32, 38, 126, 128, 132, 138) with a structure which permits a short-term or permanent variation of subsystem-immanent parameters through data and/or control commands introduced into the monitoring and control system by means of the long-range data transmission at another place.

## Revendications

1. Procédé pour surveiller une installation comportant plusieurs composants interactifs (systèmes fonctionnels), et un système de surveillance et de pilotage, pour surveiller une grue mobile, un gros excavateur ou un engin analogue, dans lequel :
- les données d'état obtenues grâce à la surveillance d'au moins certains composants sélectionnés de l'installation (systèmes fonctionnels), sont, éventuellement sur appel, transmises, à l'aide d'une télétransmission de données série appropriée, à un poste de commande ou de contrôle, éventuellement très éloigné de l'installation, et
- pour modifier les paramètres du système de surveillance et de pilotage, et/ou des systèmes fonctionnels, et pour assurer une télécommande à l'aide du système mentionné ci-dessus de télétransmission des données à partir du poste de commande ou de contrôle, des données et/ou des instructions de commande sont transmises au système de surveillance et de pliotage.

2. Procédé selon la revendication 1, caractérisé en ce que, dans le cas d'un raccordement à structure annulaire de systèmes de bus, une modification de la structure du flux de données du système de surveillance et de pilotage et/ou des systèmes fonctionnels, dans le cas où des composants de l'installation ne sont pas en état de marche, la défaillance du système est limitée aux composants de l'installation qui ne sont pas en état de marche.

3. Système destiné à mettre en oeuvre le procédé selon la revendication 1, caractérisé en ce que la systéme de surveillance et de pilotage (10, 110) de l'inetallation comporte, pour permettre un échange de données en ligne avec un poste de commande ou de contrôle éloigné (11), une interface série bidirectionnelle de télétransmission de données (12, 40, 42, 140, 142), et que le poste de commande ou de contrôle est équipé des moyens correspondants de télétransmission des données.

4. Système selon le revendication 3, caractérisé en ce que l'interface série bidirectionelle de télétransmission des données est conçue comme un module (40, 140) d'un ordinateur de gestion (24, 124) du système de surveillance et de pilotage (10, 110).

5. Système selon la revendication 3, caractérisé en ce que l'interface série bidirectionnelle de télétransmission des données est conçu comme un sous-système bus (42) du système de surveillance et de pilotage (10), avec un bus de champ série bidirectionnelle, monté en parallèle avec les différents sous-système bus.

6. Système selon la revendication 3, caractérisé en ce que l'interface série bidirectionnelle de télétransmission des données est conçue comme un sous-système bus (142) du système de surveillance et de pilotage (110), avec un bus de champ série bidirectionnelle comportant un raccordement à structure annulaire des systèmes bus, le sens du flux de données, dans le système de bus annulaire, étant inversible.

7. Système selon l'une des revendications 3 à 6, caractérisé par le couplage de sous-systèmes bus intelligents (26, 28, 32, 38, 126, 128, 132, 138), qui présentent une structure autorisant une modification permanente ou de faible durée de paramètres internes au sous-système, par des données et/ou des instructions de commande introduites en un autre point, à l'aide de la télétransmission dem données, dans le système de surveillance et de pilotage.
